**Europäisches Patentamt**

**European Patent Office**

**Office européen des brevets**

(11) Veröffentlichungsnummer: **0 240 802**
A2

(12) **EUROPÄISCHE PATENTANMELDUNG**

(21) Anmeldenummer: **87104063.0**

(22) Anmeldetag: **19.03.87**

(51) Int. Cl.³: **B 23 Q 9/00**
**B 27 C 5/10**

(30) Priorität: **11.04.86 DE 3612215**

(43) Veröffentlichungstag der Anmeldung:
**14.10.87 Patentblatt 87/42**

(84) Benannte Vertragsstaaten:
**AT BE CH DE ES FR GB IT LI NL**

(71) Anmelder: **Festo KG**
Ruiter Strasse 82
D-7300 Esslingen 1(DE)

(72) Erfinder: **Maier, Peter, Dipl.-Ing.(FH)**
Gerokstrasse 1
D-7311 Neidlingen(DE)

(72) Erfinder: **Arnold, Günter**
Albstrasse 5
D-7441 Kohlberg(DE)

(72) Erfinder: **Attinger, Karl**
Seestrasse 21
D-7311 Holzmaden(DE)

(74) Vertreter: **Reimold, Otto, Dr. Dipl.-Phys. et al,**
Patentanwälte Dipl.-Ing. R. Magenbauer Dipl.-Phys. Dr. O.
Reimold Dipl.-Phys.Dr. H. Vetter Hölderlinweg 58
D-7300 Esslingen(DE)

(54) Eine Massskala enthaltende Vorrichtung zum Justieren einer auf einem zu bearbeitenden Werkstück auflegbaren Führungsschiene bezüglich einer Bearbeitungs-Soll-Linie für ein Werkzeug.

(57) Es handelt sich um eine Vorrichtung zum Justieren einer auf einem zu bearbeitenden Werkstück (5) auflegbaren Führungsschiene (6) bezüglich einer Bearbeitungs-Soll-Linie (7) für ein Werkzeug (8). An der Führungsschiene (6) ist eine motorgetriebene Handwerkzeugmaschine (9) in Längsrichtung (15) verschiebbar führbar. Die Vorrichtung ist von einer Einstelleinrichtung (39) gebildet. Diese besitzt eine Halterungspartie (40), mit der sie an die Führungsschiene in deren Querrichtung unverrückbar lösbar ansetzbar ist. Ferner besitzt sie eine Einstellpartie (44), die sich quer zur Schienenlängsrichtung (15) erstreckt und hierbei über die dem Werkzeug (8) zugewandte Schienenlängskante (14) hinausragt. Im Bereich ihres über die Führungsschiene hinausragenden Abschnittes (45) befindet sich eine bezüglich der Soll-Linie (7) ausrichtbare Einstell-Markierung (55).

FIG. 2

Festo KG, 7300 Esslingen

Eine Maßskala enthaltende Vorrichtung zum Justieren einer auf einem zu bearbeitenden Werkstück auflegbaren Führungsschiene bezüglich einer Bearbeitungs-Soll-Linie für ein Werkzeug

Die Erfindung betrifft eine eine Maßskala enthaltende Vorrichtung zum Justieren einer auf einem zu bearbeitenden Werkstück auflegbaren Führungsschiene bezüglich einer Bearbeitungs-Soll-Linie für ein Werkzeug, wobei an der Führungsschiene eine motorgetriebene Handwerkzeugmaschine, insbesondere eine Oberfräse, derart verschiebbar führbar ist, daß ihr Werkzeug im Bereich einer Längsseite der Führungsschiene eine in deren Längsrichtung verlaufende Vorschubbewegung ausführt.

Soll an insbesondere aus Holzmaterial bestehenden Werkstücken eine präzise spanabnehmende Bearbeitung vorgenommen werden, so erfolgt dies regelmäßig unter Zuhilfenahme einer Führungsschiene bzw. -platte. Diese wird auf die Werkstückoberseite aufgelegt, und anschließend wird die gewünschte Handwerkzeugmaschine direkt oder unter Vermittlung von Führungsanschlägen an sie angesetzt, wobei das Bearbeitungswerkzeug seitlich neben einer Längskante der Führungsschiene zu liegen kommt. Nun läßt sich die Maschine entlang der Führungsschiene an dieser geführt verschieben, und das Werkzeug nimmt eine exakte, linear gerichtete Spanabnahme vor.

Erfolgt die Werkstückbearbeitung anhand einer am Werkstück vorgegebenen Bearbeitungs-Soll-Linie, beispielsweise eine Werkstückkante oder eine Anrißlinie, so ist weitere Bedingung für ein genaues Arbeiten, daß die Führungsschiene mit Bezug auf die Bearbeitungs-Soll-Linie exakt ausgerichtet ist und insbesondere ihre Längsrichtung und damit die Vorschubrichtung des Werkzeuges genau parallel zu der Soll-Linie verläuft. Die entsprechende Justierung der Führungsschiene wird dabei insbesondere bei der Verwendung von Oberfräsen erschwert, da hier zur Vermeidung von Beschädigungen der Führungsschiene relativ große, an den jeweiligen Fräserdurchmesser angepaßte Abstände zwischen der dem Fräser zugewandten Schienenkante und der Bearbeitungs-Soll-Linie einzuhalten sind. Bisher erfolgt die Justierung der Führungsschiene bezüglich der Soll-Linie mittels Maßskalen enthaltenden universellen Hilfsmitteln wie Meterstäbe, Maßbänder, Lineale od. dgl., die mit ihrer Stirnseite an die Schienenkante angelegt werden, wonach die Führungsschiene verschoben wird, bis sich der gewünschte Abstand zwischen der Kante und der Soll-Linie annähernd eingestellt hat. Dabei treten häufig Justier-Ungenauigkeiten auf, da die Hilfsmittel beim Ansetzen an die Führungsschiene bei mangelnder Aufmerksamkeit

- 3 -

leicht verkantet werden. Auch kann die Schienenkante bezüglich ihrer Linearität Maßungenauigkeiten aufweisen, beispielsweise hervorgerufen durch Fertigungstoleranzen oder Beschädigungen, so daß über die Länge der Schiene gesehen keine konstanten Maßbezugspunkte zum Ansetzen der Maßskala vorhanden sind. Zu allem Übel sind die meßtechnischen Hilfsmittel oftmals zu lang und unhandlich, als daß sie, vor allem bei beengten Platzverhältnissen, ein exaktes gleichzeitiges Anlegen sowohl an die Führungsschiene als auch an die Soll-Linie erlaubten. Auch ist mit diesen Hilfsmitteln sehr umständlich zu hantieren, da lediglich eine Hand frei bleibt, um die Führungsschiene beim Justieren handzuhaben denn ist die Führungsschiene im Bereich einer Stirnseite justiert, so kann diese Einstellung beim nachfolgenden Justieren des gegenüberliegenden Schienen-Stirnbereiches leicht verlorengehen und ein erneutes, zeitaufwendiges Nachjustieren erforderlich machen.

Häufig sind die Handwerkzeugmaschinen insbesondere im an die Führungsschiene angesetzten Zustand quer zur Schienenlängsrichtung verstellbar, so daß das Werkzeug, insbesondere das Fräswerkzeug einer Oberfräse, möglichst nahe an die Führungsschiene herangefahren werden kann, um eine stabilere Führung zu erhalten. Auch hier erweisen sich die bekannten Einstellhilfsmittel als nachteilig, da sie ein genaues Justieren der Handwerkzeugmaschine nicht erlauben, so daß die Gefahr einer Beschädigung der Schiene durch das Werkzeug besteht.

Es ist die Aufgabe der Erfindung, eine einfache und kostengünstig herstellbare Vorrichtung gemäß der eingangs genannten Art zu schaffen, mit der sich eine Führungsschiene schnell und präzise auf einem Werkstück justieren läßt. Dabei soll unter allen Umständen eine Beschädigung der Führungsschiene bei einer nachfolgenden Bearbeitung ausgeschlossen sein.

Die obige Aufgabe wird dadurch gelöst, daß die Vorrichtung von einer die Maßskala tragenden Einstelleinrichtung gebildet wird, die einerseits eine Halterungspartie aufweist, mit der sie an mindestens zwei in axialem Abstand zueinander angeordneten Stellen an die Führungsschiene in deren Querrichtung unverrückbar lösbar ansetzbar ist, und die andererseits eine Einstellpartie besitzt, die sich im angesetzten Zustand quer zur Schienenlängsrichtung und hierbei über die dem Werkzeug zugewandte Schienenlängsseite hinaus erstreckt, und daß die Einstellpartie im Bereich ihres über die Führungsschiene hinausragenden Abschnitts eine bezüglich der Bearbeitungs-Soll-Linie ausrichtbare Einstellmarkierung trägt.

Die Maßskala ist also nunmehr an einer Einstelleinrichtung angebracht, die mit der Führungsschiene an exakt vorgegebenen Stellen in Querrichtung unverrückbar koppelbar ist. Mit den Stellen, an denen die Einstelleinrichtung ansetzbar ist, sind exakte, unveränderbare Bezugspunkte gegeben, die ein präzises und insbesondere paralleles Ausrichten zu einer gegebenen Bearbeitungs-Soll-Linie ermöglichen. Hierbei kann sich die Maßskala beispielsweise im Bereich des über die Führungsschiene hinausragenden Abschnittes der Einstellpartie befinden, so daß im an die Führungsschiene angesetzten Zustand der Einstelleinrichtung ein bezüglich der Führungsschiene exakt fixierter Maßstab vorhanden ist, der ein fehlerfreies Ausrichten gestattet. Die Einstellmarkierung kann dabei zweckmäßigerweise Teil der Maßskala sein, und entsprechend der gewünschten Justierung wird sie vom jeweils gewählten Skalenstrich gebildet. Die erfindungsgemäße Einstelleinrichtung ist in ihrer Handhabung einfach und handlich, und infolge ihrer Koppelbarkeit mit der Führungsschiene bleiben der Bedienperson für den Justiervorgang der Führungsschiene beide Hände frei, was ein mit wenigen Handgriffen schnell durchführbares Justieren begünstigt. Vorteilhaft ist weiterhin, daß bei einer gegenüber der Führungsschiene querverstellbaren Handwerkzeugmaschine durch die Maßskala bzw. die Einstellmarkierung exakte Werte gegeben sind, anhand derer sich die Maschine leicht ausrichten läßt, so daß mit Sicherheit eine Beschädigung der Schiene durch das Werkzeug ausgeschlossen werden kann.

Vorteilhafte Weiterbildungen der Erfindung sind in den Unteransprüchen aufgeführt.

Bei der Weiterbildung nach Anspruch 2 läßt sich die Einstelleinrichtung in jeder Längsposition der Führungsschiene an diese einfach anbringen, so daß der Länge der jeweils zur Verfügung stehenden Bearbeitungs-Soll-Linie problemlos Rechnung getragen werden kann.

Die Weiterbildung nach Anspruch 3 erlaubt ein präzises Einstellen der Führungsschiene parallel zu einer Bear-

- 6 -

beitungs-Soll-Linie. Soll beispielsweise exakt einem Anriß entlang gearbeitet werden, so kann man sich den der Werkzeugmitte entsprechenden Skalenstrich merken und diesen exakt auf den Anriß einstellen. Soll parallel und im Abstand zu einem Anriß gearbeitet werden, z. B. bei der Herstellung einer Oberflächennut mittels einer Oberfräse, wobei der Anriß eine Längskante der Nut definiert, so läßt sich von dem die Fräsermitte definierenden Skalenstrich der Abstand zur gegebenen Soll-Linie leicht einstellen und ablesen.

Die Weiterbildung nach Anspruch 4 gewährleistet eine gute Übersichtlichkeit und ein leichteres Ablesen, vor allem wenn im Abstand zu einer Soll-Linie gearbeitet und insbesondere gefräst werden soll, da mit der Einstellmarkierung beispielsweise eine deutliche Fräser-Mittenmarkierung gegeben ist.

Die Weiterbildungen nach den Ansprüchen 7 bis 11 erhöhen den Bedienungskomfort der erfindungsgemäßen Vorrichtung. Beispielsweise läßt sich gegenüber der Bezugsmarke die bezugnehmende Maßskala so weit verschieben, bis der Abstand eines bestimmten Skalenteiles der Skala zur Bezugsmarke genau dem Abstand zwischen Werkzeug- bzw. Fräsermitte und Bezugsmarke entspricht. Dann läßt sich die Markierung bzw. das Skalenteil einfach auf die Soll-Linie legen. Unter Berücksichtigung von Anspruch 4 kann dabei das Skalenteil vorzugsweise durch die Einstellmarkierung gebildet sein.

Die Weiterbildung nach Anspruch 7 hat den Vorteil, daß das Einstellen der Einstellpartie im Bereich der Füh-

- 7 -

rungsschiene auf übersichtliche Weise durchgeführt werden kann. Das Ausrichten der Führungsschiene kann dann ohne Ablesefehler allein mit Hilfe der Einstellmarkierung erfolgen. Sie kann jedoch gemäß Anspruch 3 zweckmäßigerweise in eine weitere Maßskala integriert sein, was wiederum Bearbeitungen parallel und im Abstand zu einer Anrißlinie od. dgl. erleichtert. Bei der Weiterbildung nach Anspruch 10 läßt sich die Einstellpartie besonders leicht einstellen, und die Maßnahme nach Anspruch 11 erhöht die Einstellgenauigkeit.

Die Weiterbildung nach Anspruch 14 erweist sich als besonders vorteilhaft, wenn es sich bei der Handwerkzeugmaschine um eine Oberfräse od. dgl. handelt. Unabhängig von den jeweiligen Werkzeugdurchmessern lassen sich hier die Fräswerkzeuge so nahe wie möglich an die Führungsschiene positionieren, so daß die sich üblicherweise an der Schiene abstützende Maschine eine große Abstützfläche zur Verfügung hat. Insbesondere ist es möglich, sowohl die Führungsschiene bezüglich einer Bearbeitungs-Soll-Linie exakt auszurichten als auch gleichzeitig das Fräswerkzeug dichtestmöglich, gegebenenfalls unter Wahrung eines Sicherheitsabstandes, an die Führungsschiene heranzubringen.

Bei der Weiterbildung nach Anspruch 15 besteht vorteilhafterweise ein direkter Bezug zwischen der Justier-Markierung und der Maßskala, so daß keine Umrechnungen zum Justieren der Maschine erforderlich sind.

Die Weiterbildung nach Anspruch 20 ermöglicht den Ausgleich von Fertigungstoleranzen, indem vor Inbetriebnahme der jeweiligen Handwerkzeugmaschine die Maschinenmarkierung so an der Maschine eingestellt wird, daß sie mit der Werkzeugmitte zusammenfällt.

Nachfolgend wird die Erfindung anhand der beiliegenden Zeichnung näher erläutert. In dieser zeigen:

Fig. 1 in Vorderansicht eine als Oberfräse ausgebildete Handwerkzeugmaschine im Betrieb, wobei sie unter Vermittlung eines Führungsanschlages an einer geschnitten dargestellten Führungsschiene längsverschieblich geführt ist,

Fig. 2 eine Draufsicht auf die Anordnung nach Fig. 1, wobei sich das Fräswerkzeug außer Eingriff befindet und wobei die erfindungsgemäße Einstelleinrichtung an die Führungsschiene zu deren Justierung angesetzt ist,

Fig. 3 einen Schnitt durch das Verschiebeteil gemäß Linie III-III aus Fig. 2,

Fig. 4 in schematischer Darstellung eine vorteilhafte Einsatzmöglichkeit der erfindungsgemäßen Vorrichtung,

- 9 -

wobei die Vorrichtung und ein Auflagetisch einer Oberfräse lediglich teilweise abgebildet sind,
und

Fig. 5        eine vorteilhafte Ausführungsform
der erfindungsgemäßen Justiervorrichtung.

Die Erfindung kann besonders vorteilhaft in Zusammenhang mit der Verwendung einer Oberfräse verwendet werden, anhand einer solchen auch die nachfolgenden Betrachtungen angestellt werden. Selbstverständlich beschränkt sich die Anwendung der Erfindung nicht auf dieses Gerät, auch eine Verwendung in Zusammenhang beispielsweise mit Handkreissägen oder Stichsägen wäre
denkbar.

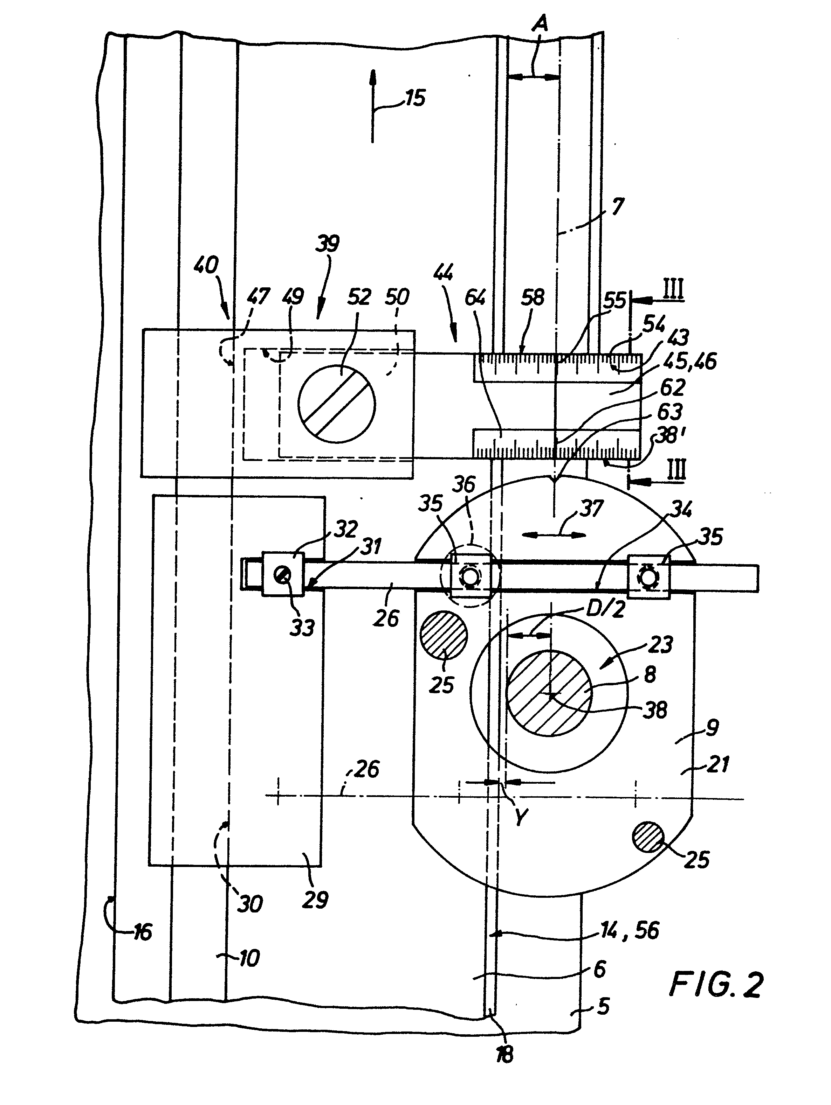

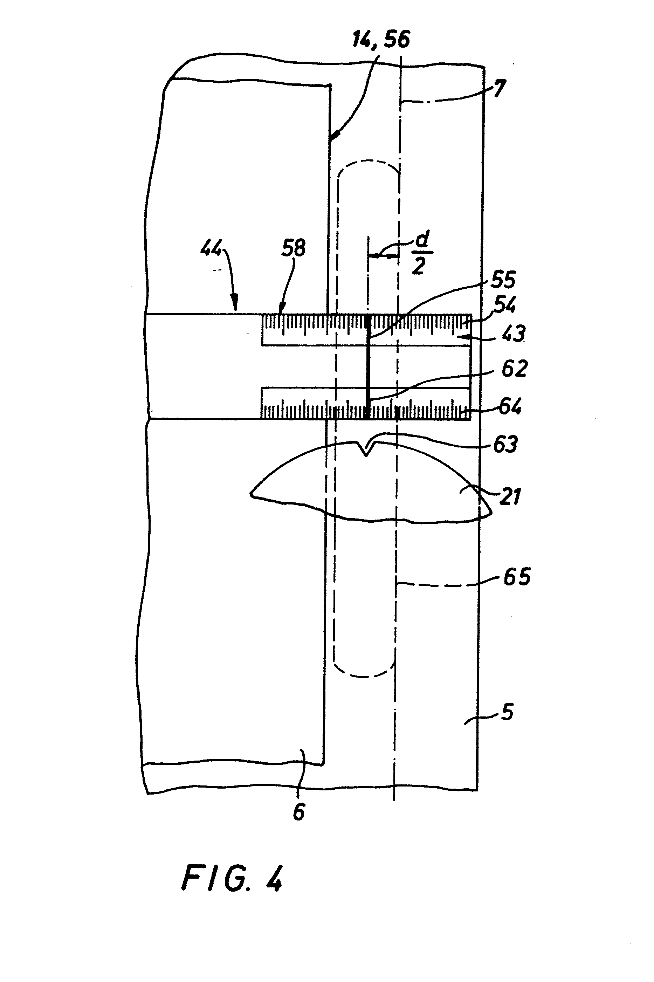

Man erkennt in der Zeichnung ein Werkstück 5, das mit
Hilfe einer Oberfräse 9 bearbeitet werden soll. Zu diesem Zweck ist auf die Werkstückoberseite eine Führungsplatte bzw. Führungsschiene 6 aufgelegt, die an ihrer
Oberseite eine sich in Längsrichtung und insbesondere
linear erstreckende Führungsrippe 10 aufweist, an die
die Oberfräse 9 derart gekoppelt ist, daß sie sich in
Längsrichtung der Führungsschiene 6 dieser gegenüber
an der Führungsrippe 10 exakt geführt verschieben läßt.
Die Oberfräse 9 besitzt ein mit rechtwinkelig zur Werkstückoberfläche angeordneter Drehachse versehenes Bearbeitungswerkzeug 8, einen Fräser, das sich im an die
Führungsschiene 6 angesetzten Zustand der Oberfräse 9
neben der Führungsschiene 6 im Bereich einer ihrer Längsseiten bzw. -kanten 14 befindet und beim Verschieben der Oberfräse 9 eine in Schienenlängsrichtung 15 verlaufende Vorschubbewegung ausführt. Die Führungsschiene 6 ist hierbei bezüglich einer Bearbeitungs-Soll-Linie 7 ausgerichtet, die eine Bezugslinie für den Werkzeugeingriff während einer Bearbeitung darstellt und die gemäß Figuren 2 und 4 durch eine Anriß- bzw. Aufrißlinie an der Werkstückoberfläche gebildet ist. Beispielsweise kann die Soll-Linie auch eine Werkstückkante sein.

Die Erfindung betrifft nun eine Vorrichtung, mit der sich die Führungsschiene 6 bezüglich einer jeweiligen Bearbeitungs-Soll-Linie 7 exakt justieren läßt, so daß das von ihr mittelbar geführte Bearbeitungswerkzeug genau die gewünschte Bahn mit Bezug auf die Linie 7 zurücklegt.

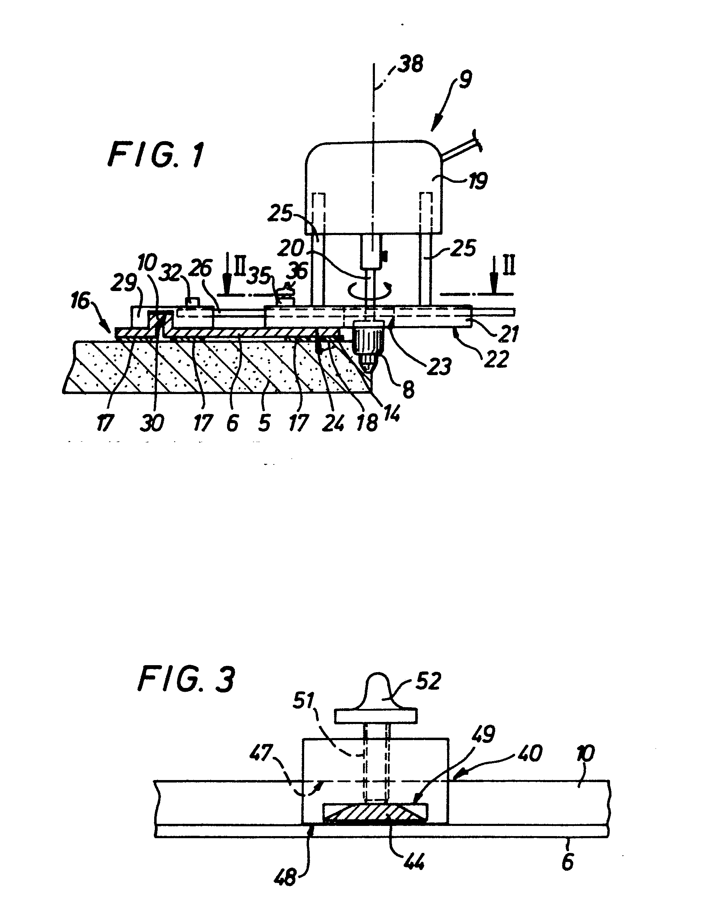

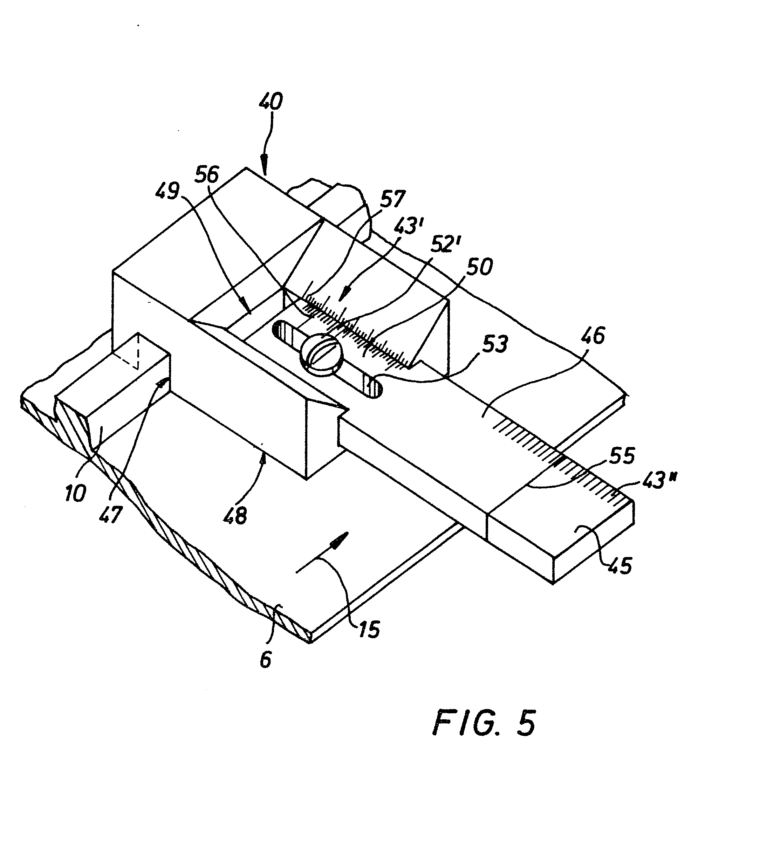

Die bei den Ausführungsbeispielen verwendete Führungsschiene 6 besitzt in Draufsicht die Gestalt eines langgestreckten Rechteckes, wobei die sich in Schienenlängsrichtung 15 erstreckende Führungsrippe 10 außerhalb der Schienenlängsmitte angeordnet ist, so daß sie gegenüber der Längskante 14 mit größerem Abstand angeordnet ist als gegenüber der entgegengesetzten Längskante 16. Die Führungsrippe 10 selbst besitzt eine Rechteckkontur und erhebt sich über die ansonsten ebene Schienenoberfläche. Die Führungsschiene 6 besteht zweckmäßigerweise aus Profilmaterial, und die Rippe 10 ist gemäß Fig. 1 als Hohlrippe ausgebildet, es kann sich bei der Schiene aber auch gut um ein Gießteil oder um ein durch spanabhebende Bearbeitung hergestelltes Teil handeln, wie dies bei der Ausführungsform nach Fig. 5 der Fall ist, bei dem die Rippe 10 aus Vollmaterial besteht. An der Unterseite der Führungsschiene 6 befinden sich mehrere, sich in Längsrichtung erstreckende Streifen eines Schutz- bzw. Haftbelages 17, der einerseits das Werkstück 5 vor Beschädigungen wie Kratzern schützt und andererseits ein Verrutschen der aufgelegten Schiene 6 auf dem Werkstück 5 verhindert. Im Bereich der Längskante 14 befindet sich eine über die Kante zum Werkzeug 8 hin leicht vorstehende Längslippe 18, die bis in die unmittelbare Nähe des Werkzeuges 8 ragt und dadurch ein Aufsplittern des Werkstückes verhindert.

Die beim Ausführungsbeispiel als Oberfräse 9 ausgebildete Handwerkzeugmaschine besitzt einen ein Antriebsaggregat enthaltenden Fräskorb 19 sowie eine vom Antriebsaggregat in Rotationsbewegung antreibbare, sich rechtwinkelig zur Führungsschienenebene erstreckende Antriebswelle 20, an der das Werkzeug 8 auswechselbar festgelegt ist. Der Fräskorb 19 und damit das Werkzeug 8 ist über Säulen 25 höhenverstellbar von einem Auflagetisch 21 getragen. Dieser besitzt, wie Fig. 2 zeigt, in Draufsicht gesehen die Gestalt eines länglichen Ovals mit abgeflachten Längsseiten, seine dem Fräskorb 19 abgewandte Unterseite 22 ist eben, und er besitzt eine zentrale Werkzeug-Durchgangsöffnung 23, durch die hindurch das Werkzeug 8 absenkbar ist, um in Werkstückeingriff zu gelangen.

Wie in Fig. 1 abgebildet, befindet sich das Werkzeug 8 während eines Bearbeitungsvorganges in unmittelbarer Nähe der Längskante 14 der Führungsschiene 6, und dementsprechend liegt der Auflagetisch 21 mit seiner vom

- 12 -

Werkzeug 8 aus gesehen zur Führungsrippe 10 hinweisenden Unterseitenpartie 24 gleitfähig auf der Schienenoberfläche auf. Der Abstand zur Führungsrippe 10 wird überbrückt durch zwei parallel und im Abstand zueinander angeordnete, sich quer zur Schienenlängsrichtung 15 erstreckende Stangen 26, die einerseits am Auflagetisch 21 und andererseits an einem Führungsanschlag 29 angebracht sind. Letzterer besitzt eine plattenförmige Gestalt mit länglich-rechteckigem Grundriß, und seine Längsrichtung verläuft parallel zur Schienenlängsrichtung 15. In seine Unterseite ist eine sich in Längsrichtung 15 erstreckende Führungsausnehmung 30, z.B. eine Längsnut, eingelassen, deren Breite der Rippenbreite entspricht, so daß er reiterähnlich auf die Führungsrippe 10 in deren Längsrichtung verschiebbar aufsetzbar ist. Die Stangen 26 sitzen in Oberflächen-Ausnehmungen 31 des Anschlages 29 ein, die von angegossenen Augen 32 überbrückt werden, in die sich Befestigungsschrauben 33 einschrauben lassen, um die Stangen 26 gegen dem Führungsanschlag 29 festzuspannen.

Auch der Auflagetisch 21 ist an seiner Oberseite mit zwei in einem dem Abstand der beiden Stangen 26 entsprechenden Abstand zueinander angeordneten, im an die Führungsschiene 6 angesetzten Zustand quer zu deren Längsrichtung 15 verlaufenden Oberflächen-Ausnehmungen 34 versehen, in denen die Stangen 26 mit Verschiebespiel einliegen, und die im Bereich der beiden Tisch-Längsseiten jeweils von einem Steg 35 überspannt sind. Die Stege besitzen Gewindebohrungen, in die von oben her Klemmschrauben 36 einschraubbar sind, um die Stangen 26 gegenüber dem Auflagetisch 21 zu verklemmen. Die Stan-

- 13 -

gen 26 ragen auf der der Schiene 6 entgegengesetzten Seite aus dem Auflagetisch 21 heraus, so daß genügend Spielraum vorhanden ist, um im gelösten Zustand der Befestigungsschrauben 36 den Auflagetisch gemäß Pfeil 37 quer zur Schienenlängsrichtung 15 zu verstellen.

Es versteht sich, daß an der Führungsschiene auch Geräte mit Auflagetischen führbar sind, bei denen der Auflagetisch selbst die Führungsausnehmung 30 enthält, und wobei dadurch eine Querverstellung des Werkzeuges 8 nicht möglich ist. Es versteht sich, daß hierbei der Abstand zwischen der Werkzeugdreh- bzw. -längsachse 38 und der zugewandten Schienenkante 14 so groß bemessen ist, daß auch das größtmögliche ansetzbare Werkzeug die Kante 14 nicht berührt.

Die erfindungsgemäße Vorrichtung ist von einer Einstelleinrichtung 39 gebildet. Diese besitzt eine Halterungspartie 40, mit der sie an mindestens zwei in Längsrichtung 15 gesehen im Abstand zueinander angeordneten Stellen an die Führungsschiene 6 derart lösbar ansetzbar ist, daß sie quer zur Längsrichtung 15 im angesetzten Zustand unverrückbar festgelegt ist. Ferner besitzt die Einstelleinrichtung 39 eine Einstellpartie 44, die sich im an die Führungsschiene 6 angesetzten Zustand der Einrichtung ausgehend von der Halterungspartie 40 quer zur Schienenlängsrichtung 15 erstreckt und hierbei über die dem Werkzeug 8 zugewandte Schienenlängskante 14 mit einem Abschnitt 45 hinausragt. Die Einstelleinrichtung 39 weist darüber hinaus eine Maßskala 43 auf, mit deren Hilfe die Führungsschiene 6 gegenüber einer Bearbeitungs-Soll-Linie 7 einfach ausgerichtet werden kann.

- 14 -

Bei den abgebildeten Ausführungsbeispielen sind die Halterungspartie 40 und die Einstellpartie 44 als separate Bauteile ausgebildet, wobei die Einstellpartie 44 an der Halterungspartie 40 quer zur Schienenlängsrichtung 15 verstellbar gelagert ist und ein Verschiebeteil 46 bildet. Die Halterungspartie 40 ist gemäß Figuren 2 und 3 klotzartig aufgebaut und weist an ihrer der Führungsschiene 6 zugewandten Unterseite 48 eine Führungsausnehmung 47 auf, in der Art, wie sie auch beim Ausführungsbeispiel nach Fig. 5 vorhanden ist. Diese besitzt eine zur Führungsrippe 10 im wesentlichen komplementäre Kontur, so daß die Halterungspartie 40 bzw. die Einstelleinrichtung 39 reiterartig auf die Führungsrippe aufsetzbar ist.

Ferner besitzt die Halterungspartie 40 eine im angesetzten Zustand quer zur Längsrichtung 15 verlaufende Verschiebeteil-Aufnahme 49, in der das zweckmäßigerweise leistenförmig ausgebildete Verschiebeteil 46 mit Verschiebespiel aufgenommen ist. Die Aufnahme 49 ist gemäß Fig. 2 und 3 in Gestalt einer Vertiefung in die Halterungspartie 40 eingebracht, und in sie mündet eine andererseits an der Partie-Oberseite ausmündende Gewindebohrung 51, in der sich eine knebelartige Feststellschraube 52 zum lösbaren Verspannen der beiden Partien 40, 44 gegeneinander vorschrauben läßt.

Beim Ausführungsbeispiel nach Fig. 5 ist die Verschiebeteil-Aufnahme 49 nach oben hin offen, und das Verschiebeteil 46 besitzt in seinem Stirnbereich 50 einen durchgehenden Längsschlitz 53, durch den sich eine Feststellschraube 52' hindurchstecken und in einer nicht abge-

- 15 -

bildeten Gewindebohrung am Grund der Halterungspartie einschrauben läßt. Im gelösten Zustand der Schraube 52 läßt sich auch hier das Verschiebeteil 46 quer zur Schienenlängsrichtung 15 (im angesetzten Zustand gesehen) verschieben.

Bei den in Fig. 2 und 4 abgebildeten Ausführungsbeispielen befindet sich die Maßskala 43 im Bereich des im angesetzten Zustand über die Führungsschiene 6 hinausragenden Abschnittes 45 der Einstellpartie 44 und besitzt mehrere quer zur Längsrichtung 15 gesehen in gleichmäßigen Abständen aufeinanderfolgend angeordnete Skalenstriche 54. In die Maßskala 43 ist eine Einstellmarkierung 55 integriert, die hier zweckmäßigerweise in Gestalt eines besonders hervorgehobenen Skalenstriches insbesondere in der Längsmitte der Maßskala 43 ausgebildet ist.

Ferner ist eine gegenüber der Maßskala 43 bzw. der Einstellmarkierung 55 ortsfest angeordnete Bezugsmarkierung vorhanden, mit der die Maßskala 43 bzw. die Einstellmarkierung zusammenarbeiten kann, so daß exakte reproduzierbare Werte einstellbar sind. Diese Bezugsmarkierung 56 ist bei den Ausführungsbeispielen nach Fig. 2 und 4 an der Führungsschiene 6 angeordnet und vorteilhafterweise durch die dem Werkzeug 8 zugewandte Schienenlängskante 14 gebildet. Es versteht sich, daß die Bezugsmarkierung beispielsweise auch an der Halterungspartie vorgesehen sein kann, wobei in diesem Falle die Maßskala 43 zweckmäßigerweise verlängert ist oder aber eine zweite Maßskala im Bereich der Halterungspartie auf dem Verstellteil angeordnet ist.

Bei der Ausführungsform nach Fig. 5 befindet sich die eigentliche Maßskala 43' ortsfest an der Halterungspartie 40, wie abgebildet zweckmäßigerweise oderhalb des Verschiebeteils 46 und diesem benachbart, und die Bezugsmarkierung 56 ist auf dem Verschiebeteil 46 angebracht. Dabei ist die Bezugsmarkierung 56 in eine Bezugsskala 57 in Gestalt eines Nonius integriert, so daß Einstellungen derart, wie sie bei Schieblehren durchführbar sind, vorgenommen werden können. Die Einstellmarkierung 55 befindet sich gemäß Fig. 5 im Bereich des Abschnittes 45 des Verschiebeteiles 46 und ist zweckmäßigerweise ebenfalls in eine weitere Maßskala 43'' integriert.

Bei der Ausführungsform gemäß den Figuren 2 bis 4 befindet sich die Maßskala 43 an einer im an die Führungsschiene angesetzten Zustand in deren Längsrichtung weisenden Längsseite 58 des Verschiebeteiles 46, und zwar an dessen Oberseite, die zweckmäßigerweise im Bereich der Skala zum Werkstück hin abgeschrägt ist. An der gegenüberliegenden Längsseite 58' ist an der Einstellpartie 44 eine Justier-Markierung 62 vorgesehen. Diese dient als Hilfsmittel zum Positionieren der Oberfräse bzw. deren Werkzeuges 8 gegenüber der Schienenkante 14. Die Justier-Markierung 62 ist gemäß Fig. 2 von einem zur Längsseite 58' hin verlängerten Skalenteil der Maßskala 43 gebildet, vorzugsweise von der verlängerten Einstell-Markierung 55. Die Justier-Markierung 62 ist dabei Teil einer entlang der Längskante 58' an der Oberseite des Verschiebeteils 46 angeordneten Justier-Skala 64, die insbesondere in der gleichen Art und Weise ausbildet ist wie die Maßskala. Auch im Bereich der Längskante 58' ist das Verschiebeteil 46 abgeschrägt, so daß das Verschiebeteil im Bereich seiner beiden Skalen im Querschnitt gemäß Fig. 3 eine trapezförmige Kontur besitzt.

Um die Handwerkzeugmaschine gegenüber der Einstelleinrichtung 39 auszurichten, werden sowohl die Einstelleinrichtung als auch die Maschine derart an die Führungsschiene 6 angesetzt, daß der Justier-Markierung 62 bzw. Justier-Skala 64 einer an der Maschine angeordnete Maschinen-Markierung 63 gegenüberliegt, wobei insbesondere die Maschinen-Markierung und die Justier-Markierung einander gegenüber durch Querverschieben des Auflagetisches 21 ausrichtbar und zur Deckung bringbar sind. Die Maschinen-Markierung 63 befindet sich dabei vorzugsweise am Auflagetisch 21 der Oberfräse, und zwar, in Vorschubrichtung gesehen, an deren Vorder- oder Rückseite, und insbesondere befindet sich die Markierung 63 in einer die Werkzeuglängsachse 38 enthaltenden, sich in Schienenlängsrichtung 15 erstreckenden Ebene. Die Maschinen-Markierung 63 gibt also praktisch die Werkzeug- bzw. Fräsermitte im an die Führungsschiene angesetzten Bearbeitungszustand an und ist gemäß Fig. 2 der Einfachheit halber als in den Auflagetisch eingebrachte Kerbe ausgebildet.

Eine Benutzung der erfindungsgemäßen Justiervorrichtung gestaltet sich nun beispielsweise folgendermaßen: Zunächst muß festgelegt werden, mit was für einem Fräserdurchmesser D gearbeitet werden soll. Dieser Durchmesser bestimmt sich beispielsweise nach der Breite einer zu erstellenden Oberflächennut im Werkstück 5. Der Halbmesser D/2 des Fräserdurchmessers entspricht dem Mindestabstand der Werkzeugdrehachse 38 von der Schienenkante 14 bzw. der dort geringfügig vorstehenden Schutzlippe 18. Um mit Sicherheit eine Beschädigung der Führungsschiene auszuschließen, wird man einen Sicherheitsabstand, zweckmäßigerweise in der Größenordnung von 2 mm, einräumen. Die Summe aus D/2 und dem Sicherheitsabstand y ergibt das Einstellmaß A, das im an die Führungsschiene angesetzten Zustand der Einstelleinrichtung 39 zwischen der Einstellmarkierung 55 und der die Bezugsmarkierung definierenden Schienenkante 14 durch Querverschieben des Verschiebeteils 46 einzustellen ist. Ist das Maß A eingestellt, so kann die angesetzte Maschine exakt ausgerichtet werden, indem ihre die Fräsermitte kennzeichnende Maschinen-Markierung 63 genau auf die Justier-Markierung 62 ausgerichtet wird. Hier ist allerdings Voraussetzung, daß wie beim Ausführungsbeispiel nach Fig. 2, die beiden Markierungen 55, 62 in einer gemeinsamen, zur Längsrichtung 15 parallelen Linie verlaufen. (Ist dies nicht der Fall und ist beispielsweise die Justier-Skala 64 oder die Justier-Markierung 62 gegenüber der Einstellmarkierung bzw. -skala versetzt, so erfolgt die Einstellung des Maßes A zweckmässigerweise mit Hilfe der Justier-Skala 64, wobei vorzugsweise als Bezug ebenfalls die Bezugs-Markierung 56 verwendet wird.) Nun ist sichergestellt, daß die Führungsschiene bei der Bearbeitung des Werkstückes vom Fräser nicht beschädigt wird und daß gleichzeitig die Oberfräse mit ihrem Auflagetisch 21 so weit wie möglich auf der Führungsschiene aufliegt.

Nun kann die Führungsschiene 6 mit Bezug der Bearbeitungs-Soll-Linie 7 ausgerichtet werden. Hier sei zunächst auf Fig. 2 eingegangen, wo die Linie 7 eine Bearbeitungslinie vorgibt, der entlang die Fräsermitte bewegt werden soll. Hier wird die Einstelleinrichtung 39 zunächst im Bereich eines schmalseitigen Endbereiches der Führungsschiene angesetzt, und danach wird die Führungsschiene so lange positioniert, bis die Einstell-Markierung 55 mit der Linie 7 zusammenfällt. Dann wird die Einrichtung 39 zum gegenüberliegenden schmalseitigen Bereich umgesetzt, und es erfolgt auch hier eine Positionierung der Führungsschiene, so daß diese letztendlich genau parallel zur Soll-Linie 7 verläuft, wobei gleichzeitig sichergestellt ist, daß die Fräsermitte bei der Vorschubbewegung der Maschine genau auf der Soll-Linie 7 entlangbewegt wird.

Oftmals ist es erforderlich, Oberflächennuten herzustellen, von denen lediglich eine Längskante 65 durch die Bearbeitungs-Soll-Linie 7 sowie die Nutbreite vorgegeben ist. Hierbei erfolgt zunächst wieder die Einstellung des Fräserabstandes A in der oben angegebenen Art und Weise. Sodann wir die Führungsschiene bezüglich der Soll-Linie 7 derart ausgerichtet, daß sich zwischen der Einstell-Markierung 55 und der Soll-Linie 7 ein der halben Nutbreite bzw. dem Fräserhalbmesser entsprechender Abstand d/2 einstellt. Auch diese Einstellung wird an mehreren Stellen der Führungsschiene vorgenommen, so daß wiederum exakte Parallelität gegeben ist.

Bei der Ausführungsform nach Fig. 5 erfolgt das Einstellen des Fräserabstandes A übersichtlicherweise im
Bereich der Führungsschiene und der Halterungspartie.
Auf eine Justier-Skala wurde hierbei verzichtet, und
die Justier- Markierung wird von der verlängerten
Einstell-Markierung 55 gebildet. Es versteht sich, daß
die erfindungsgemäße Einrichtung auch ohne separate
Justier-Skala bzw. -Markierung verwendet werden kann,
deren Aufgabe wird hierbei von der Einstell-Skala bzw.
-Markierung übernommen.

Zweckmäßigerweise sind die Skalen in Millimeter geeicht,
so daß an ihnen direkt die Fräsermaße eingestellt werden können. Vorzugsweise können zur leichteren Bedienbarkeit der Justiervorrichtung Bedienungstabellen erstellt werden, in denen auf Grund der gegebenen Größen
direkt die Einstellwerte abgelesen werden können. Hier
ist es zweckmäßig, die einzelnen Skalenstriche zusätzlich mit Zahlenwerten zu verstehen.

Vorzugsweise ist die Maschinen-Markierung im angesetzten Zustand der Maschine gesehen quer zur Schienenlängsrichtung 15 stufenlos verstellbar und einstellbar, so
daß auf Grund von Fertigungstoleranzen bedingte Ungenauigkeiten hinsichtlich der Mittenlage der Werkzeugachse bezüglich des Auflagetisches durch eine Nachjustierung der Maschinen-Markierung ausgeglichen werden können. Beispielsweise ist hier die Maschinen-Markierung
in einen verschieblichen Maßstab integriert.

Mit der erfindungsgemäßen Vorrichtung läßt sich insbesondere eine Oberfräse in allen Einsatzfällen exakt
ausrichten. Auf einfache Weise läßt sich die Mittenmar-

- 21 -

kierung bzw. Maschinen-Markierung durch seitliches Verschieben der Oberfräse deckungsgleich mit der Einstell-Markierung einstellen. Und auch die Einstell-Markierung bzw. der gewünschte Skalenteil an der Einstell-Markierung läßt sich ohne Ablesefehler einfach zur Deckung mit der Bearbeitungs-Soll-Linie bringen.

- 22 -

Patentansprüche

1.    Eine Maßskala enthaltende Vorrichtung zum Justieren einer auf einem zu bearbeitenden Werkstück auflegbaren Führungsschiene bezüglich einer Bearbeitungs-Soll-Linie für ein Werkzeug, wobei an der Führungsschiene eine motorgetriebene Handwerkzeugmaschine, insbesondere eine Oberfräse, derart verschiebbar führbar ist, daß ihr Werkzeug im Bereich einer Längsseite der Führungsschiene eine in deren Längsrichtung verlaufende Vorschubbewegung ausführt, dadurch gekennzeichnet, daß sie von einer die Maßskala (43, 43', 43'') tragenden Einstelleinrichtung (39) gebildet wird, die einerseits eine Halterungspartie (40) aufweist, mit der sie an mindestens zwei in axialem Abstand zueinander angeordneten Stellen an die Führungsschiene (6) in deren Querrichtung (63) unverrückbar lösbar ansetzbar ist, und die andererseits eine Einstellpartie (44) besitzt, die sich im angesetzten Zustand quer (63) zur Schienenlängsrichtung (15) und hierbei über die dem Werkzeug (8) zugewandte Schienenlängsseite (14) hinaus erstreckt, und daß die Einstellpartie (44) im Bereich ihres über die Führungsschiene (6) hinausragenden Abschnittes (45) eine bezüglich der Bearbeitungs-Soll-Linie (7) ausrichtbare Einstell-Markierung (55) trägt.

2.    Vorrichtung nach Anspruch 1, wobei die Führungsschiene eine sich in Längsrichtung erstreckende Führungsrippe zum Führen der Handwerkzeugmaschine trägt, dadurch gekennzeichnet, daß die Einstelleinrichtung (39) mit der Halterungspartie (40) reiterartig auf die Führungsrippe (10) aufsetzbar ist.

3. Vorrichtung nach Anspruch 1 oder 2, dadurch gekennzeichnet, daß die Maßskala (43, 43'') im Bereich des über die Führungsschiene (6) hinausragenden Abschnittes (45) der Einstellpartie (44) angeordnet ist.

4. Vorrichtung nach einem der Ansprüche 1 bis 3, dadurch gekennzeichnet, daß die Einstell-Markierung (55) in der Maßskala (43, 43', 43'') enthalten ist.

5. Vorrichtung nach einem der Ansprüche 1 bis 4, dadurch gekennzeichnet, daß die Einstellpartie (44) von einem separaten, an der Halterungspartie (40) im angesetzten Zustand der Einstelleinrichtung (39) quer zur Schienenlängsrichtung (15) verstellbar sowie einstellbar gelagerten Verschiebeteil (46) gebildet ist.

6. Vorrichtung nach Anspruch 5, dadurch gekennzeichnet, daß die Halterungspartie (40) eine im angesetzten Zustand quer zur Längsrichtung (15) verlaufende Verschiebeteil-Aufnahme (49) aufweist, in der das insbesondere leistenförmig ausgebildete Verschiebeteil (46) mit seinem dem über die Führungsschiene (6) hinausragenden Abschnitt (45) entgegengesetzten Abschnitt (50) mit Verschiebespiel geführt ist, wobei zweckmäßigerweise eine Feststellschraube (52, 52') zum lösbaren unverschieblichen Festlegen des Verschiebeteiles (46) gegenüber der Halterungspartie (40) vorhanden ist.

7. Vorrichtung nach einem der Ansprüche 1 bis 6, dadurch gekennzeichnet, daß eine gegenüber der Maßskala (43, 43') bzw. der Einstell-Markierung (55) ortsfest angeordnete Bezugs-Markierung (56) vorhanden ist.

8. Vorrichtung nach Anspruch 7, dadurch gekennzeichnet, daß die Bezugs-Markierung (56) an der Halterungspartie (40) oder an der Führungsschiene (6) angeordnet ist.

9. Vorrichtung nach einem der Ansprüche 4 bis 8, dadurch gekennzeichnet, daß im Bereich der Führungsschiene (6) bzw. der Halterungspartie (40) eine mit der Bezugs-Markierung (56) zusammenarbeitende Maßskala (43') vorhanden ist, wobei im über die Führungsschiene (6) hinausragenden Bereich der Einstellpartie (44) eine Einstell-Markierung (55) vorhanden ist.

10. Vorrichtung nach einem der Ansprüche 7 bis 9, dadurch gekennzeichnet, daß die Bezugs-Markierung (56) durch eine Längslinie bzw. Längskante der Führungsschiene (6) und insbesondere durch die dem Werkzeug (8) zugewandte Schienenlängskante (14) gebildet ist.

11. Vorrichtung nach einem der Ansprüche 7 bis 9, dadurch gekennzeichnet, daß die Bezugs-Markierung (55) in eine Bezugs-Skala (57) bzw. einen Nonius integriert ist, die bzw. der sich zweckmäßigerweise quer zur Schienenlängsrichtung (15) erstreckt.

12. Vorrichtung nach einem der Ansprüche 6 bis 11, dadurch gekennzeichnet, daß eine Maßskala (43') zweckmässigerweise ortsfest an der Halterungspartie (40) oder der Führungsschiene (6) angeordnet und die Bezugs-Markierung (56) am Verschiebeteil vorgesehen ist, wobei sich im dem Werkzeug (8) zugewandten, über die Führungsschiene hinausragenden Abschnitt (45) der Einstellpartie (44) die Einstell-Markierung (55) befindet.

13. Vorrichtung nach einem der Ansprüche 1 bis 12, dadurch gekennzeichnet, daß die an der Einstellpartie (44) angeordnete Maßskala (43, 43'') bzw. Einstell-Markierung (55) an einer im an die Führungsschiene (6) angesetzten Zustand in Längsrichtung (15) der Führungsschiene (6) weisenden Längsseite (38) und insbesondere Längskante der Einstellpartie (44) befindet.

14. Vorrichtung nach einem der Ansprüche 1 bis 13, wobei die in Längsrichtung der Führungsschiene verschieblich führbare Handwerkzeugmaschine insbesondere quer zur Schienenlängsrichtung verstellbar und einstellbar ist, dadurch gekennzeichnet, daß an der Handwerkzeugmaschine (9) eine Maschinen-Markierung (63) und an der Einstellpartie (44) eine Justier-Markierung (62) angeordnet ist, wobei die beiden Markierungen (63, 62) zueinander ausrichtbar und insbesondere deckungsgleich bringbar sind, zweckmäßigerweise durch Querverschieben der angesetzten Handwerkzeugmaschine (9) gegenüber der feststehenden bzw. festgestellten Einstellpartie (44).

15. Vorrichtung nach Anspruch 14, dadurch gekennzeichnet, daß die Justier-Markierung (62) von der Einstell-Markierung (55) bzw. von einem Skalenteil (54) der Maßskala (43, 43'') gebildet ist.

16. Vorrichtung nach einem der Ansprüche 13 bis 15, dadurch gekennzeichnet, daß sich die Justier-Markierung (62) an der gegenüberliegenden Seite (38') der die Maßskala (43, 43') bzw. die Einstell-Markierung (55) tragenden Einstellpartieseite (38) befindet.

17. Vorrichtung nach Anspruch 16, dadurch gekennzeichnet, daß die Justier-Markierung (62) durch die im angesetzten Zustand in Längsrichtung (15) der Führungsschiene (6) verlängerte Einstell-Markierung (55) bzw. ein verlängertes Skalenteil (54) gebildet ist.

18. Vorrichtung nach Anspruch 16 oder 17, dadurch gekennzeichnet, daß die Justier-Markierung (62) in einer Justier-Skala (64) enthalten ist.

19. Vorrichtung nach einem der Ansprüche 10 bis 18, wobei die Handwerkzeugmaschine einen auf der Führungsschiene bzw. auf dem Werkstück auflegbaren Auflagetisch besitzt, dadurch gekennzeichnet, daß die zweckmäßigerweise als Kerbe ausgebildete Justier-Markierung (62) an einer in Schienenlängsrichtung (15) weisenden Seite des Auflagetisches (21) und insbesondere in einer die Werkzeuglängsmitte enthaltenden sowie in Schienenlängsrichtung (15) verlaufenden Ebene angeordnet ist.

20. Vorrichtung nach einem der Ansprüche 10 bis 19, dadurch gekennzeichnet, daß die insbesondere am Auflagetisch (21) der Handwerkzeugmaschine (9) angeordnete Maschinen-Markierung (63) quer zur Schienenlängsrichtung (15) verstellbar und einstellbar ist und zweckmäßigerweise in Gestalt eines am Auflagetisch (21) querverschiebbar
angeordneten Markierungsträger ausgebildet ist.

FIG. 1

FIG. 3

FIG. 2

0240802

FIG. 4

FIG. 5